# EUROPEAN PATENT APPLICATION

(11) **EP 3 089 015 A1**
(43) Date of publication of application: **02.11.2016**
(21) Application number: 14878664.3
(22) Date of filing: 16.01.2014
(51) Int. Cl.: G06F 3/048, G06F 3/041

(54) **PROCESSING METHOD FOR TOUCH SIGNAL AND TERMINAL DEVICE**

(71) Applicant: Huawei Device Co., Ltd., Shenzhen, Guangdong 518129 (CN)
(72) Inventor: JIANG, Xiuping, Shenzhen Guangdong 518129 (CN); YI, Hui, Shenzhen Guangdong 518129 (CN); SUN, Zengcai, Shenzhen Guangdong 518129 (CN)
(74) Representative: Thun, Clemens
(86) International application number: PCT/CN2014/070701
(87) International publication number: WO 2015/106416

(57) **Abstract**

Embodiments of the present invention provide a method for processing a touch signal and a terminal device, so as to reduce impact of a user's unintentional touch on usage of a touchscreen device and improve user experience. The method includes: receiving information about touch points acquired by a touchscreen; determining, according to the information about the touch points, whether the current touch points include an unintentional touch point whose touch duration is greater than or equal to preset duration; and if yes, shielding the unintentional touch point, where the preset duration is greater than touch duration required by a user to long press a touch point.

## Description

### TECHNICAL FIELD

The present invention relates to the field of electronic technologies, and in particular, to a method for processing a touch signal and a terminal device.

### BACKGROUND

A touchscreen technology is a technology used widely in a mobile terminal, and principles of the technology is as follows:
A touchscreen driver of a terminal recognizes information about a touch point such as coordinates and a pressing force after detecting that a touchscreen is touched, and then reports the information to a framework (framework) layer of an operating system. According to the recently reported information about the touch point, the framework layer obtains information about an action of a user by means of analysis, and then reports the information to an application, so that the application responds to the information about the action of the user. The framework layer analyzes the information about the action of the user by recognizing a pressing event, a releasing event, or the like of each touch point. For example, if the framework layer finds that duration during which a user presses a touch point is less than t0, it is considered that the user taps (tap) the touch point; if the framework layer finds that duration during which the user presses a touch point is between t0 and t1, the framework layer considers that the user presses (press) the touch point; if the framework layer finds that, within time t1 after the user presses a touch point, the framework layer does not detect release of the touch point, the framework layer considers that the user long presses (long press) the touch point. The application makes different responses according to information, reported by the framework layer, about different actions.

As the technology develops, frames of a mobile phone and a tablet computer become smaller, and screens become larger. In this way, a probability that a hand, which holds a screen, of a user touches the screen by mistake increases. When reporting normal touch information of the user, the touchscreen driver also reports information about the unintentional touch performed by the hand that holds the screen. The framework layer takes the information about the unintentional touch into consideration when analyzing the information about the action of the user, resulting in that the application cannot make a response at last, or the response made does not meet expectation of the user, thereby affecting user experience.

Therefore, the unintentional touch of the user affects normal functioning of the touchscreen device. The prior art has not provided a solution on how to reduce impact of the user's unintentional touch on usage of a touchscreen device.

### SUMMARY

Embodiments of the present invention provide a method for processing a touch signal and a terminal device, so as to resolve a problem that a touchscreen device cannot be used normally due to an unintentional touch of a user.

According to a first aspect, an embodiment of the present invention provides a method for processing a touch signal, including:
receiving information about touch points acquired by a touchscreen;
determining, according to the information about the touch points, whether the current touch points include an unintentional touch point whose touch duration is greater than or equal to preset duration; and
if yes, shielding the unintentional touch point,
where the preset duration is greater than touch duration required by a user to long press a touch point.

With reference to the first aspect, in a first possible implementation manner, the determining, according to the information about the touch points, whether the current touch points include an unintentional touch point whose touch duration is greater than or equal to preset duration includes:
determining, according to coordinate information in the information about the touch points currently acquired by the touchscreen and coordinate information in information about touch points acquired by the touchscreen last time, a same touch point acquired by the touchscreen twice;
determining whether touch duration of the same touch point is greater than or equal to the preset duration; and
if yes, determining that the same touch point is an unintentional touch point.

With reference to the first possible implementation manner of the first aspect, in a second possible implementation manner, the determining, according to coordinate information in the information about the touch points currently acquired by the touchscreen and coordinate information in information about touch points acquired by the touchscreen last time, a same touch point acquired by the touchscreen twice includes:
determining, when it is determined that a distance between a first touch point in the currently acquired touch points and a second touch point in the touch points acquired last time is shorter than or equal to a preset distance according to the coordinate information in the information about the touch points currently acquired by the touchscreen and the coordinate information in the information about the touch points acquired by the touchscreen last time, that the first touch point and the second touch point are a same touch point.

With reference to the first possible implementation manner of the first aspect, in a third possible implementation manner, determining touch duration of the same touch point includes:
acquiring a current time point and an initial touch time point of the same touch point; and
subtracting the initial touch time point of the same touch point from the current time point, to obtain the touch duration of the same touch point.

With reference to the third possible implementation manner of the first aspect, in a fourth possible implementation manner, acquiring an initial touch time point of a touch point includes:
recording, when it is determined, according to information about touch points acquired by the touchscreen at any time and information about touch points acquired by the touchscreen at a previous time of the any time, that the touch points acquired at any time include a new touch point a time point when the information about the touch points is acquired at the any time as an initial touch time point of the new touch point.

With reference to the first aspect, in a fifth possible implementation manner, before the determining, according to the information about the touch points, whether the current touch points include an unintentional touch point whose touch duration is greater than or equal to preset duration, the method further includes:
determining that an application providing a user with a touch interface is an application in a preset application list.

According to a second aspect, an embodiment of the present invention provides a terminal device, including:
a touch point information receiving unit, configured to receive information about touch points acquired by a touchscreen;
a touch point information processing unit, configured to determine, according to the information about the touch points, whether the current touch points include an unintentional touch point whose touch duration is greater than or equal to preset duration; and trigger, if yes, a touch point shielding unit; and
the touch point shielding unit, configured to shield the unintentional touch point,
where the preset duration is greater than touch duration required by a user to long press a touch point.

With reference to the second aspect, in a first possible implementation manner, the touch point information processing unit includes:
a touch point determining unit, configured to determine, according to coordinate information in the information about the touch points currently acquired by the touchscreen and coordinate information in information about touch points acquired by the touchscreen last time, a same touch point acquired by the touchscreen twice; and
a touch point duration determining unit, configured to determine whether touch duration of the same touch point is greater than or equal to the preset duration; and determine, if yes, that the same touch point is an unintentional touch point and trigger the touch point shielding unit.

With reference to the first possible implementation manner of the second aspect, in a second possible implementation manner, the touch point determining unit is specifically configured to:
determine, when it is determined that a distance between a first touch point in the currently acquired touch points and a second touch point in the touch points acquired last time is shorter than or equal to a preset distance according to the coordinate information in the information about the touch points currently acquired by the touchscreen and the coordinate information in the information about the touch points acquired by the touchscreen last time, that the first touch point and the second touch point are a same touch point.

With reference to the first possible implementation manner of the second aspect, in a third possible implementation manner, the device further includes:
a duration calculation unit, configured to acquire a current time point and an initial touch time point of the same touch point; and
subtract the initial touch time point of the same touch point from the current time point, to obtain the touch duration of the same touch point.

With reference to the third possible implementation manner of the second aspect, in a fourth possible implementation manner, the device further includes:
a initial touch time point determining unit, configured to record, when it is determined that the touch points acquired at any time include a new touch point according to information about touch points acquired by the touchscreen at any time and information about touch points acquired by the touchscreen at a previous time of the any time, a time point when the information about the touch points is acquired at the any time as an initial touch time point of the new touch point.

With reference to the second aspect, in a fifth possible implementation manner, the device further includes:
a application filtering unit, configured to determine, before the touch point information processing unit determines, according to the information about the touch points, whether the current touch points include an unintentional touch point whose touch duration is greater than or equal to preset duration, that an application providing a user with a touch interface is an application in a preset application list.

According to a third aspect, an embodiment of the present invention provides a terminal device, including:
a touchscreen, configured to acquire information about touch points; and
a processor, configured to receive the information acquired by the touchscreen about the touch points;
determine, according to the information about the touch points, whether the current touch points include an unintentional touch point whose touch duration is greater than or equal to preset duration; and
if yes, shield the unintentional touch point,
where the preset duration is greater than touch duration required by a user to long press a touch point.

With reference to the third aspect, in a first possible implementation manner, when the processor is configured to determine, according to the information about the touch points, whether the current touch points include an unintentional touch point whose touch duration is greater than or equal to preset duration, the determining specifically includes:
determining, according to coordinate information in the information about the touch points currently acquired by the touchscreen and coordinate information in information about touch points acquired by the touchscreen last time, a same touch point acquired by the touchscreen twice;
determining whether touch duration of the same touch point is greater than or equal to the preset duration; and
if yes, determining that the same touch point is an unintentional touch point.

With reference to the first possible implementation manner of the third aspect, in a second possible implementation manner, when the processor is configured to determine, according to the coordinate information in the information about the touch points currently acquired by the touchscreen and the coordinate information in the information about the touch points acquired by the touchscreen last time, a same touch point acquired by the touchscreen twice, the determining specifically includes:
determining, when it is determined that a distance between a first touch point in the currently acquired touch points and a second touch point in the touch points acquired last time is shorter than or equal to a preset distance according to the coordinate information in the information about the touch points currently acquired by the touchscreen and the coordinate information in the information about the touch points acquired by the touchscreen last time, that the first touch point and the second touch point are a same touch point.

With reference to the first possible implementation manner of the third aspect, in a third possible implementation manner, when the processor is configured to determine the touch duration of the same touch point, the determining specifically includes:
acquiring a current time point and an initial touch time point of the same touch point; and
subtracting the initial touch time point of the same touch point from the current time point, to obtain the touch duration of the same touch point.

With reference to the third possible implementation manner of the third aspect, in a fourth possible implementation manner, when the processor is configured to acquire an initial touch time point of a touch point, the acquiring specifically includes:
recording, when it is determined, according to information about touch points acquired by the touchscreen at any time and information about touch points acquired by the touchscreen at a previous time of the any time, that the touch points acquired at any time include a new touch point a time point when the information about the touch points is acquired at the any time as an initial touch time point of the new touch point.

With reference to the third aspect, in a fifth possible implementation manner, before the processor is configured to determine, according to the information about the touch points, whether the current touch points include an unintentional touch point whose touch duration is greater than or equal to preset duration, the processor is further configured to:
determine that an application providing a user with a touch interface is an application in a preset application list.

According to the embodiments of the present invention, information acquired by a touchscreen about touch points is received; it is determined, according to the information about the touch points, whether the current touch points include an unintentional touch point whose touch duration is greater than or equal to preset duration; and if yes, the unintentional touch point is shielded, where the preset duration is greater than touch duration required by a user to long press a touch point. By shielding the unintentional touch point, a terminal can respond to only a normal touch of a user, thereby reducing impact of the user's unintentional touch on usage of a touchscreen device and improving user experience.

### BRIEF DESCRIPTION OF DRAWINGS

FIG. 1 is a schematic flowchart of a method for processing a touch signal according to an embodiment of the present invention;
FIG. 2 and FIG. 3 are schematic flowcharts of another method for processing a touch signal according to an embodiment of the present invention;
FIG. 4 is a schematic flowchart of a specific embodiment of the present invention;
FIG. 5 and FIG. 6 are schematic structural diagrams of a terminal device according to an embodiment of the present invention; and
FIG. 7 is a schematic structural diagram of another terminal device according to an embodiment of the present invention.

### DESCRIPTION OF EMBODIMENTS

Embodiments of the present invention provide a method for processing a touch signal and a terminal device, so as to reduce impact of a user's unintentional touch on usage of a touchscreen device and improve user experience.

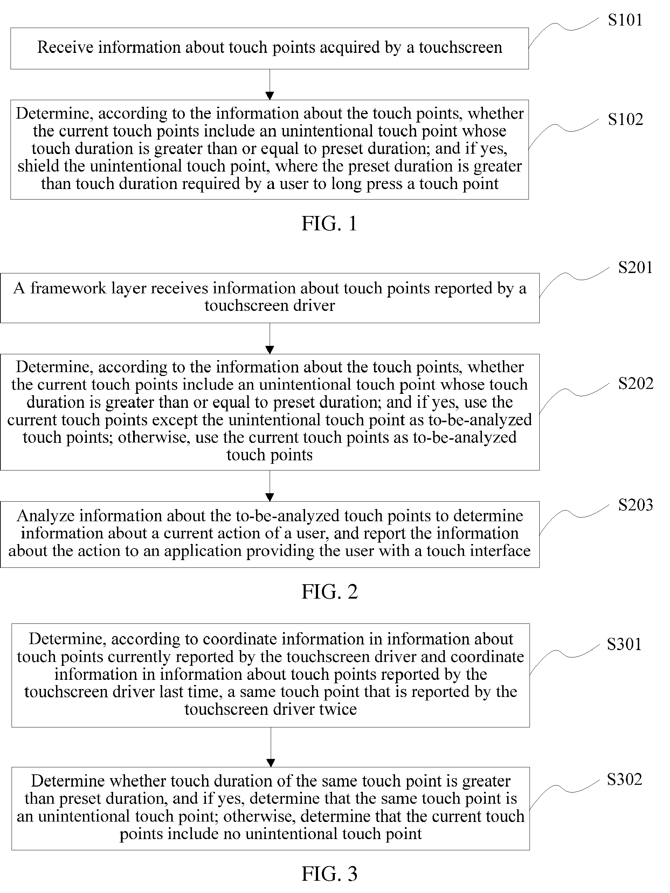

Referring to FIG. 1, a method for processing a touch signal provided in an embodiment of the present invention includes:
S101: Receive information about touch points acquired by a touchscreen.
S102: Determine, according to the information about the touch points, whether the current touch points include an unintentional touch point whose touch duration is greater than or equal to preset duration; and
if yes, shield the unintentional touch point.

The preset duration is greater than touch duration required by a user to long press a touch point.

In this embodiment of the present invention, by acquiring and shielding an unintentional touch point, a terminal can respond to only a normal touch of a user, thereby reducing impact of the user's unintentional touch on usage of a touchscreen device and improving user experience.

In the method shown in FIG. 1, a framework layer of a terminal device performs steps S101 to S102, the framework layer receives information about touch points reported by a touchscreen driver, analyzes, according to the information about the touch points reported by the touchscreen driver, information about an action of a user, and then reports the information to an application. The following gives a detailed description.

Referring to FIG. 2, another method for processing a touch signal provided in an embodiment of the present invention includes:
S201: A framework layer receives information about touch points reported by a touchscreen driver.

After detecting the touch points, the touchscreen driver reports a touch signal including at least coordinate information of the touch points, and the framework layer of an operating system receives the touch signal reported by the touchscreen driver and performs subsequent processing.

S202: Determine, according to the information about the touch points, whether the current touch points include an unintentional touch point whose touch duration is greater than or equal to preset duration; and if yes, use the current touch points except the unintentional touch point as to-be-analyzed touch points; otherwise, use the current touch points as to-be-analyzed touch points.

The preset duration is greater than touch duration required by a user to long press a touch point, so as to avoid a case that the touch point long pressed by the user is also recognized as an unintentional touch point.

The unintentional touch point mentioned in this embodiment of the present invention mainly includes an unintentional touch point produced when a hand holding a screen presses the screen. This type of unintentional touch points is characterized by relatively long touch duration, while touch duration of a normal operation of a user is relatively shorter. Moreover, each time a touchscreen driver reports touch points, the touchscreen driver reports the unintentional touch point. Therefore, it is required to find a repeatedly-reported touch point by analyzing touch points reported by the touchscreen driver each time, and analyze touch duration of the repeatedly-reported touch point, so as to acquire an unintentional touch point. Specifically, it is determined, according to coordinate information in information about touch points currently reported by the touchscreen driver and coordinate information in information about touch points reported by the touchscreen driver last time, whether there is a same touch point that is reported by the touchscreen driver twice. If there is, it is further determined whether touch duration of the same touch point is long enough, and if the touch duration reaches preset duration, it is considered that the same touch point is an unintentional touch point; and if there is not, which indicates that, compared with the touch points reported by the touchscreen driver last time, all of the current touch points change, it is considered that there is no unintentional touch point in the currently reported touch points.

Referring to FIG. 3, step S202 of determining, according to the information about the touch points, whether the current touch points include an unintentional touch point whose touch duration is greater than or equal to preset duration includes:
S301: Determine, according to coordinate information in information about touch points currently reported by the touchscreen driver and coordinate information in information about touch points reported by the touchscreen driver last time, a same touch point that is reported by the touchscreen driver twice.

Further, step S301 includes:
determining, when it is determined that a distance between a first touch point in the currently reported touch points and a second touch point in the touch points reported last time is shorter than or equal to a preset distance according to the coordinate information in the information about the touch points currently reported by the touchscreen driver and the coordinate information in the information about the touch points reported by the touchscreen driver last time, that the first touch point and the second touch point are a same touch point.

In this embodiment of the present invention, the preset distance is in pixels, and may be zero pixels, or may be greater than zero pixels. When the preset distance is a value greater than zero pixels, if a distance between a pair of touch points reported by the touchscreen driver at any two times is shorter than or equal to the preset distance, the pair of touch points may be considered as a same touch point. In this way, a case in which an unintentional touch point is incorrectly recognized as a new touch point after slight movement can be avoided, and a possibility that the unintentional touch point is recognized is improved.

S302: Determine whether touch duration of the same touch point is greater than or equal to preset duration, and if yes, determine that the same touch point is an unintentional touch point; otherwise, determine that the current touch points include no unintentional touch point.

Specifically, determining touch duration of the same touch point includes: acquiring a current time point and an initial touch time point of the same touch point; and subtracting the initial touch time point of the same touch point from the current time point, to obtain the touch duration of the same touch point.

Further, acquiring an initial touch time point of a touch point includes: recording, when it is determined, according to information about touch points reported by the touchscreen driver at any time and information about touch points reported by the touchscreen driver at a previous time of the any time, that the information about the touch points reported at any time includes a new touch point a time point when the information about the touch points is reported at the any time as an initial touch time point of the new touch point.

For example, at a time point t01, the touchscreen driver reports a touch point A1; at a time point t02, the touchscreen driver reports touch points A2 and A3; at a time point t03, the touchscreen driver reports touch points A4 and A5. After it is determined that a distance between A2 and A1 and a distance between A3 and A1 are both longer than the preset distance, it is determined that A 2 and A3 are new touch points, and initial touch time points of A2 and A3 are t02. At the time point t03, after it is determined that a distance between A4 and A2 is shorter than the preset distance, A4 and A2 are considered as a same touch point. Touch duration of the touch point is a difference between t03 and t02. Subsequently, if a reported touch point A6 is received at a time point t04, and it is determined that a distance between A6 and A4 is shorter than the preset distance, a difference between t04 and t02 is recorded as touch duration of A6.

Alternatively, determining touch duration of the same touch point includes:
querying whether a distance between the same touch point and a recorded unintentional touch point is shorter than or equal to the preset distance; and if yes, considering that duration of the same touch point is greater than the preset duration, and the same touch point is an unintentional touch point; otherwise, acquiring a current time point and an initial touch time point of the same touch point, and subtracting the initial touch time point of the same touch point from the current time point, to obtain touch duration of the same touch point.

In this embodiment, a buffer area configured to store information about an unintentional touch point is set. Each time the same touch point is detected, the buffer area is first queried to determine whether the same touch point is an unintentional touch point; if yes, it is directly determined that the same touch point is an unintentional touch point; otherwise, touch duration of the same touch point is calculated; and when it is determined by means of calculation that the same touch point is an unintentional touch point, information about the unintentional touch point is recorded in the buffer area.

Setting a buffer area configured to record an unintentional touch point can avoid a case in which touch duration is calculated each time the same touch point is found, reduce operation costs of recognition of an unintentional touch point, and improve working efficiency of a device.

S203: Analyze information about the to-be-analyzed touch points to determine information about a current action of a user, and report the information about the action to an application providing the user with a touch interface.

In step S202, the unintentional touch point is shielded, and therefore, in step S203, during analysis on the information about the action of the user, an unintentional-touch behavior of the user has no impact on an analysis result. In this way, after the framework layer reports the analysis result to the application, the application responds to only a normal operation of the user, which meets expectation of the user.

Specifically, the framework layer determines information about an action, such as tapping or pressing, of the user according to a change situation of to-be-analyzed touch points determined at two successive times and an interval between two time points of reporting of the touchscreen driver, and reports the determined information about the action to an application providing a user with a touch interface.

In addition, before step S202, the method further includes: determining that an application providing a user with a touch interface is an application in a preset application list. That is, an unintentional touch point is shielded only when it is determined that an application providing a user with a touch interface is an application in a preset application list. An application that may involve an operation needing to be performed by long pressing a touchscreen is not put into the preset application list, touch operations of such a type of applications are similar to an unintentional touch, and therefore, a step of shielding an unintentional touch point is not performed, and the framework layer still performs processing in an existing processing manner.

The following describes an entire process of this embodiment of the present invention with reference to specific parameters, which specifically includes the following steps:
S401: A touchscreen driver reports a touch point.
S402: Determine whether a current application is an application in a preset application list; and if yes, perform step S403; otherwise, perform step S406.
S403: Determine whether a distance between the currently reported touch point and a touch point reported by the touchscreen driver last time is within 10 pixels; and if yes, perform step S404; otherwise, perform step S406.
S404: Determine whether accumulated touch duration of the touch point is longer than two seconds; and if yes, perform step S405; otherwise, perform step S406.
S405: Shield the touch point, analyze a remaining touch point, and report an analysis result to the application.
S406: Analyze a touch point in an existing manner and report an analysis result to the application.

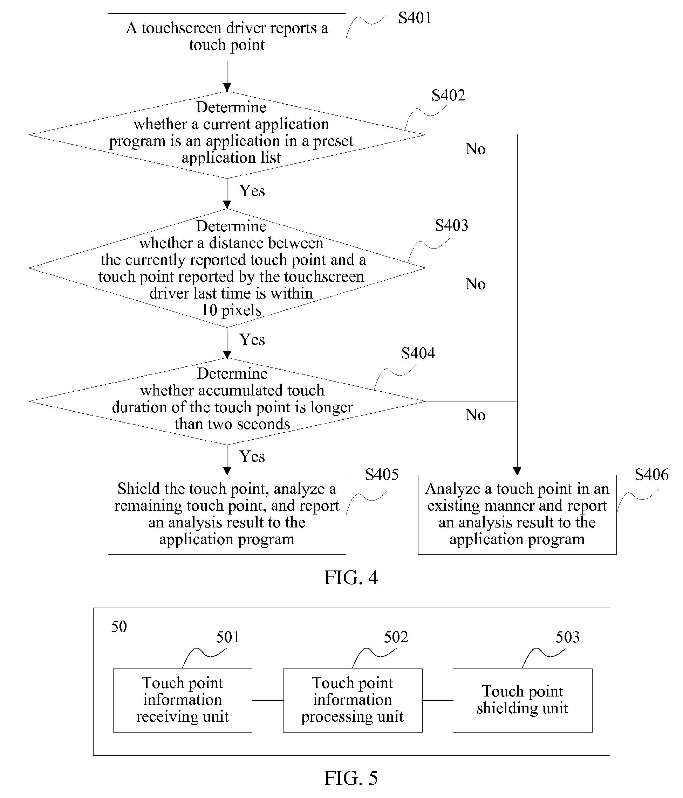

Referring to FIG. 5, a terminal device 50 provided in an embodiment of the present invention includes:
a unit 501 for receiving information about a touch point, configured to receive information about touch points acquired by a touchscreen;
a unit 502 for processing information about a touch point, configured to determine, according to the information about the touch points, whether the current touch points include an unintentional touch point whose touch duration is greater than or equal to preset duration;
and trigger, if yes, a unit 503 for shielding a touch point; and
the unit 503 for shielding a touch point, configured to shield the unintentional touch point,
where the preset duration is greater than touch duration required by a user to long press a touch point.

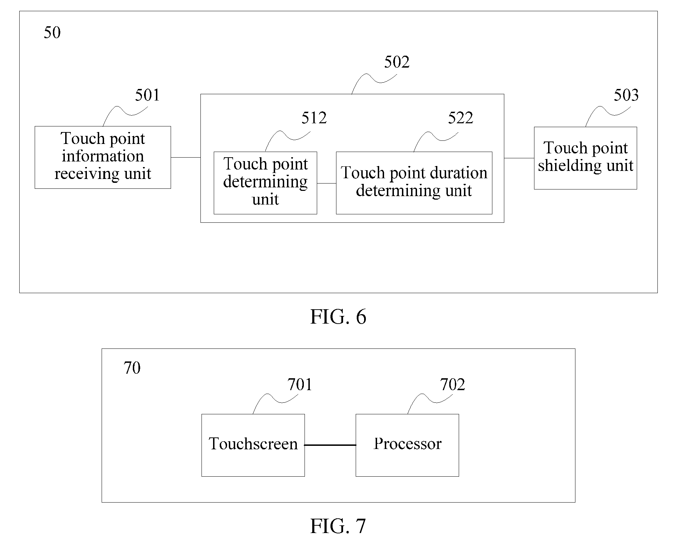

Referring to FIG. 6, the unit 502 for processing information about a touch point includes:
a unit 512 for determining a touch point, configured to determine, according to coordinate information in the information about the touch points currently acquired by the touchscreen and coordinate information in information about touch points acquired by the touchscreen last time, a same touch point acquired by the touchscreen twice; and
a unit 522 for determining duration of a touch point, configured to determine whether touch duration of the same touch point is greater than or equal to the preset duration; and determine, if yes, that the same touch point is an unintentional touch point and trigger the touch point shielding unit.

The unit 512 for determining a touch point is specifically configured to determine, when it is determined that a distance between a first touch point in the currently acquired touch points and a second touch point in the touch points acquired last time is shorter than or equal to a preset distance according to the coordinate information in the information about the touch points currently acquired by the touchscreen and the coordinate information in the information about the touch points acquired by the touchscreen last time, that the first touch point and the second touch point are a same touch point.

The terminal device 50 further includes: a duration calculation unit, configured to acquire a current time point and an initial touch time point of the same touch point; and subtract the initial touch time point of the same touch point from the current time point, to obtain touch duration of the same touch point.

The terminal device 50 further includes: a initial touch time point determining unit, configured to record, when it is determined that the touch points acquired at any time include a new touch point according to information about touch points acquired by the touchscreen at any time and information about touch points acquired by the touchscreen at a previous time of the any time, a time point when the information about the touch points is acquired at the any time as an initial touch time point of the new touch point.

The terminal device 50 further includes a application filtering unit, configured to determine, before the touch point information processing unit determines, according to the information about the touch points, whether the current touch points include an unintentional touch point whose touch duration is greater than or equal to preset duration, that an application providing a user with a touch interface is an application in a preset application list.

Referring to FIG. 7, a terminal device 70 provided in an embodiment of the present invention includes:
a touchscreen 701, configured to acquire information about touch points; and
a processor 702, configured to receive the information acquired by the touchscreen about the touch points;
determine, according to the information about the touch points, whether the current touch points include an unintentional touch point whose touch duration is greater than or equal to preset duration; and
if yes, shield the unintentional touch point,
where the preset duration is greater than touch duration required by a user to long press a touch point.

When the processor 702 is configured to determine, according to the information about the touch points, whether the current touch points include an unintentional touch point whose touch duration is greater than or equal to preset duration, the determining specifically includes:
determining, according to coordinate information in the information about the touch points currently acquired by the touchscreen and coordinate information in information about touch points acquired by the touchscreen last time, a same touch point acquired by the touchscreen twice;
determining whether touch duration of the same touch point is greater than or equal to the preset duration; and
if yes, determining that the same touch point is an unintentional touch point.

When the processor 702 is configured to determine, according to the coordinate information in the information about the touch points currently acquired by the touchscreen and the coordinate information in the information about the touch points acquired by the touchscreen last time, a same touch point acquired by the touchscreen twice, the determining specifically includes:
determining, when it is determined that a distance between a first touch point in the currently acquired touch points and a second touch point in the touch points acquired last time is shorter than or equal to a preset distance according to the coordinate information in the information about the touch points currently acquired by the touchscreen and the coordinate information in the information about the touch points acquired by the touchscreen last time, that the first touch point and the second touch point are a same touch point.

When the processor 702 is configured to determine the touch duration of the same touch point, the determining specifically includes:
acquiring a current time point and an initial touch time point of the same touch point; and
subtracting the initial touch time point of the same touch point from the current time point, to obtain the touch duration of the same touch point.

When the processor 702 is configured to acquire an initial touch time point of a touch point, the acquiring specifically includes:
recording, when it is determined, according to information about touch points acquired by the touchscreen at any time and information about touch points acquired by the touchscreen at a previous time of the any time, that the touch points acquired at any time include a new touch point a time point when the information about the touch points is acquired at the any time as an initial touch time point of the new touch point.

Before the processor 702 is configured to determine, according to the information about the touch points, whether the current touch points include an unintentional touch point whose touch duration is greater than or equal to preset duration, the processor is further configured to:
determine that an application providing a user with a touch interface is an application in a preset application list.

In conclusion, the embodiments of the present invention provide a method for processing a touch signal and a terminal device. By shielding an unintentional touch point and then analyzing information about an action of a user, an analysis result of a normal touch operation of the user except an unintentional touch, so than an application can respond to only a normal touch of the user, thereby reducing impact of the user's unintentional touch on usage of a touchscreen device and improving user experience. According to the embodiments of the present invention, a process of shielding the unintentional touch point is newly added before a framework layer performs analysis, which has relatively good compatibility. Moreover, compared with a solution that corresponding modules that recognize an unintentional touch are separately added to and carried in an application, the present invention is simpler.

A person skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Obviously, a person skilled in the art can make various modifications and variations to the present invention without departing from the spirit and scope of the present invention. The present invention is intended to cover these modifications and variations provided that they fall within the scope of protection defined by the following claims and their equivalent technologies.

## Claims

1. A method for processing a touch signal, comprising:
receiving information about touch points acquired by a touchscreen;
determining, according to the information about the touch points, whether the current touch points comprise an unintentional touch point whose touch duration is greater than or equal to preset duration; and
if the touch duration is greater than or equal to the preset duration, shielding the unintentional touch point,
wherein the preset duration is greater than touch duration required by a user to long press a touch point.

2. The method according to claim 1, wherein the determining, according to the information about the touch points, whether the current touch points comprise an unintentional touch point whose touch duration is greater than or equal to preset duration comprises:
determining, according to coordinate information in the information about the touch points currently acquired by the touchscreen and coordinate information in information about touch points acquired by the touchscreen last time, a same touch point acquired by the touchscreen twice;
determining whether touch duration of the same touch point is greater than or equal to the preset duration; and
if the touch duration of the same touch point is greater than or equal to the preset duration, determining that the same touch point is an unintentional touch point.

3. The method according to claim 2, wherein the determining, according to coordinate information in the information about the touch points currently acquired by the touchscreen and coordinate information in information about touch points acquired by the touchscreen last time, a same touch point acquired by the touchscreen twice comprises:
determining, when it is determined that a distance between a first touch point in the currently acquired touch points and a second touch point in the touch points acquired last time is shorter than or equal to a preset distance according to the coordinate information in the information about the touch points currently acquired by the touchscreen and the coordinate information in the information about the touch points acquired by the touchscreen last time, that the first touch point and the second touch point are a same touch point.

4. The method according to claim 2, wherein determining touch duration of the same touch point comprises:
acquiring a current time point and an initial touch time point of the same touch point; and
subtracting the initial touch time point of the same touch point from the current time point, to obtain the touch duration of the same touch point.

5. The method according to claim 4, wherein acquiring an initial touch time point of a touch point comprises:
recording, when it is determined, according to information about touch points acquired by the touchscreen at any time and information about touch points acquired by the touchscreen at a previous time of the any time, that the touch points acquired at any time comprise a new touch point a time point when the information about the touch points is acquired at the any time as an initial touch time point of the new touch point.

6. The method according to claim 1, before the determining, according to the information about the touch points, whether the current touch points comprise an unintentional touch point whose touch duration is greater than or equal to preset duration, further comprising:
determining that an application providing a user with a touch interface is an application in a preset application list.

7. A terminal device, comprising:
a touch point information receiving unit, configured to receive information about touch points acquired by a touchscreen;
a touch point information processing unit, configured to determine, according to the information about the touch points, whether the current touch points comprise an unintentional touch point whose touch duration is greater than or equal to preset duration; and trigger, if yes, a touch point shielding unit; and
the touch point shielding unit, configured to shield the unintentional touch point,
wherein the preset duration is greater than touch duration required by a user to long press a touch point.

8. The device according to claim 7, wherein the touch point information processing unit comprises:
a touch point determining unit, configured to determine, according to coordinate information in the information about the touch points currently acquired by the touchscreen and coordinate information in information about touch points acquired by the touchscreen last time, a same touch point acquired by the touchscreen twice; and
a touch point duration determining unit, configured to determine whether touch duration of the same touch point is greater than or equal to the preset duration; and determine, if yes, that the same touch point is an unintentional touch point and trigger the touch point shielding unit.

9. The device according to claim 8, wherein the touch point determining unit is specifically configured to:
determine, when it is determined that a distance between a first touch point in the currently acquired touch points and a second touch point in the touch points acquired last time is shorter than or equal to a preset distance according to the coordinate information in the information about the touch points currently acquired by the touchscreen and the coordinate information in the information about the touch points acquired by the touchscreen last time, that the first touch point and the second touch point are a same touch point.

10. The device according to claim 8, further comprising:
a duration calculation unit, configured to acquire a current time point and an initial touch time point of the same touch point; and
subtract the initial touch time point of the same touch point from the current time point, to obtain touch duration of the same touch point.

11. The device according to claim 10, further comprising:
a initial touch time point determining unit, configured to record, when it is determined that the touch points acquired at any time comprise a new touch point according to information about touch points acquired by the touchscreen at any time and information about touch points acquired by the touchscreen at a previous time of the any time, a time point when the information about the touch points is acquired at the any time as an initial touch time point of the new touch point.

12. The device according to claim 7, further comprising:
a application filtering unit, configured to determine, before the touch point information processing unit determines, according to the information about the touch points, whether the current touch points comprise an unintentional touch point whose touch duration is greater than or equal to preset duration, that an application providing a user with a touch interface is an application in a preset application list.

13. A terminal device, comprising:
a touchscreen, configured to acquire information about touch points; and
a processor, configured to receive the information acquired by the touchscreen about the touch points;
determine, according to the information about the touch points, whether the current touch points comprise an unintentional touch point whose touch duration is greater than or equal to preset duration; and
if yes, shield the unintentional touch point,
wherein the preset duration is greater than touch duration required by a user to long press a touch point.

14. The device according to claim 13, when the processor is configured to determine, according to the information about the touch points, whether the current touch points comprise an unintentional touch point whose touch duration is greater than or equal to preset duration, the determining specifically comprising:
determining, according to coordinate information in the information about the touch points currently acquired by the touchscreen and coordinate information in information about touch points acquired by the touchscreen last time, a same touch point acquired by the touchscreen twice;
determining whether touch duration of the same touch point is greater than or equal to the preset duration; and
if yes, determining that the same touch point is an unintentional touch point.

15. The device according to claim 14, when the processor is configured to determine, according to the coordinate information in the information about the touch points currently acquired by the touchscreen and the coordinate information in the information about the touch points acquired by the touchscreen last time, a same touch point acquired by the touchscreen twice, the determining specifically comprising:
determining, when it is determined that a distance between a first touch point in the currently acquired touch points and a second touch point in the touch points acquired last time is shorter than or equal to a preset distance according to the coordinate information in the information about the touch points currently acquired by the touchscreen and the coordinate information in the information about the touch points acquired by the touchscreen last time, that the first touch point and the second touch point are a same touch point.

16. The device according to claim 14, when the processor is configured to determine the touch duration of the same touch point, the determining specifically comprising:
acquiring a current time point and an initial touch time point of the same touch point; and
subtracting the initial touch time point of the same touch point from the current time point, to obtain the touch duration of the same touch point.

17. The device according to claim 16, when the processor is configured to acquire an initial touch time point of a touch point, the acquiring specifically comprising:
recording, when it is determined, according to information about touch points acquired by the touchscreen at any time and information about touch points acquired by the touchscreen at a previous time of the any time, that the touch points acquired at any time comprise a new touch point a time point when the information about the touch points is acquired at the any time as an initial touch time point of the new touch point.

18. The device according to claim 13, wherein before the processor is configured to determine, according to the information about the touch points, whether the current touch points comprise an unintentional touch point whose touch duration is greater than or equal to preset duration, the processor is further configured to:
determine that an application providing a user with a touch interface is an application in a preset application list.
